# EUROPÄISCHE PATENTSCHRIFT

(11) **EP 2 306 052 B1**
(45) Veröffentlichungstag und Bekanntmachung des Hinweises auf die Patenterteilung: **30.04.2014**
(21) Anmeldenummer: 10008648.7
(22) Anmeldetag: 19.08.2010
(51) Int. Cl.: F16J 15/34

(54) **Gleitringdichtung**
Mechanical seal
Joint mécanique

(30) Priorität: 01.10.2009 DE 102009049093
(43) Veröffentlichungstag der Anmeldung: 06.04.2011
(73) Patentinhaber: KACO GmbH + Co. KG, 74072 Heilbronn (DE)
(72) Erfinder: Hoffmann, Tobias, 74388 Talheim (DE); Ogaza, Eckhard, 74182 Obersulm (DE)
(74) Vertreter: Jackisch-Kohl, Anna-Katharina

(56) Entgegenhaltungen:
- DE-A1- 19 739 398
- FR-A1- 2 787 851
- US-A- 5 873 574
- US-B1- 6 311 983

## Beschreibung

Die Erfindung betrifft eine Gleitringdichtung nach dem Oberbegriff des Anspruches 1.

Bei Gleitringdichtungen tritt das Problem auf, dass sie unter bestimmten Einsatzbedingungen Geräusche erzeugen. Es gibt derzeit keine wirkungsvollen Maßnahmen, um die Gleitringdichtung ausreichend zu dämpfen und die Geräusche zu vermeiden.

Gleitringdichtungen mit Dämpfungsteilen sind bekannt aus z.B. FR 2 787 851, US 6,311,983 und DE 197 39 398.

Der Erfindung liegt die Aufgabe zugrunde, die gattungsgemäße Gleitringdichtung so auszubilden, dass sie kostengünstig gefertigt werden kann und eine wirkungsvolle Geräuschdämpfung gewährleistet.

Diese Aufgabe wird bei der gattungsgemäßen Gleitringsdichtung erfindungsgemäß mit den kennzeichnenden Merkmalen des Anspruches 1 gelöst.

Das Dämpfungsteil weist ein geformtes Blechteil auf, das sich einfach und kostengünstig herstellen lässt. Aufgrund seiner Formstabilität kann es einfach in die Gleitringdichtung eingebaut werden. Der Blechteil gewährleistet eine lange Einsatzdauer des Dämpfungsteiles. Mit dem Federteil ist das Dämpfungsteil unter Vorspannung abgestützt. Aufgrund der metallischen Ausbildung des Dämpfungsteiles kann eine gezielte Vorspannkraft eingestellt werden, um eine an den Einsatzfall der Gleitringdichtung optimal angepasste Dämpfungswirkung zu erzielen. Zwischen dem Dämpfungsteil und dem Abstützbereich entsteht eine Mikroreibung, die zur Dämpfungswirkung führt. Das Dämpfungsteil unterdrückt auch bei extremsten Betriebsbedingungen Geräusche wirkungsvoll. Es kann kostengünstig gefertigt und problemlos eingebaut werden und gewährleistet gleichzeitig eine lange Betriebsdauer. Die Gleitringdichtung wird vorteilhaft in der Kraftfahrzeugtechnik eingesetzt.

Bei einer Ausgestaltung hat das Dämpfungsteil einen äußeren Mantel, der an einer Wandung des Einbauraumes der Gleitringdichtung unter radialer Vorspannung abgestützt ist.

Vorteilhaft ist es, wenn der Federteil über seinen Umfang mit einer Profilierung, vorzugsweise einer wellenförmigen Profilierung, versehen ist. Sie gewährleistet zum einen eine optimale Dämpfung, zum anderen wird dadurch eine hohe Stabilität des Dämpfungsteiles erzielt.

Die erfindungsgemäße Gleitringdichtung wird bevorzugt bei Wasserpumpen zur Geräuschdämpfung eingesetzt. Das Dämpfungsteil, insbesondere sein Federteil, ist so ausgebildet, dass es eine Mikroreibung erzeugt, die zu einer optimalen Geräuschdämpfung führt.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsformen näher erläutert. Es zeigen
- Fig. 1 bis Fig. 11: jeweils eine Hälfte einer Ausführungsform einer Gleitringdichtung im Axialschnitt,
- Fig. 12: eine Hälfte einer ersten Ausführungsform eines ringförmigen Dämpfungsteiles der Gleitringdichtung im Axialschnitt,
- Fig. 12a: das Dämpfungsteil gemäß Fig. 12 in Seitenansicht,
- Fig. 12b: das Dämpfungsteil gemäß Fig. 12 in Draufsicht,
- Fig. 13: in einer Darstellung entsprechend Fig. 12 eine zweite Ausfüh- rungsform eines ringförmigen Dämpfungsteils,
- Fig. 14: jeweils eine Hälfte einer Ausführungsform einer erfindungsgemäßen Gleitringdichtung im Axialschnitt,
- Fig. 15: in Seitenansicht ein ringförmiges Dämpfungsteil der erfindungsgemäßen Gleitringdichtung gemäß Fig. 14,
- Fig. 16: das Dämpfungsteil gemäß Fig. 15 in Draufsicht,
- Fig. 17: eine Hälfte einer weiteren Ausführungsform einer erfindungsgemäßen Gleitringdichtung im Axialschnitt,
- Fig. 18: eine weitere Ausführungsform eines ringförmigen Dämpfungsteiles der Gleitringdichtung gemäß Fig. 17,
- Fig. 19: eine Draufsicht auf das Dämpfungsteil gemäß Fig. 18,
- Fig. 20 und Fig. 22: jeweils eine Hälfte einer weiteren Ausführungsform einer Gleitringdichtung im Axialschnitt.

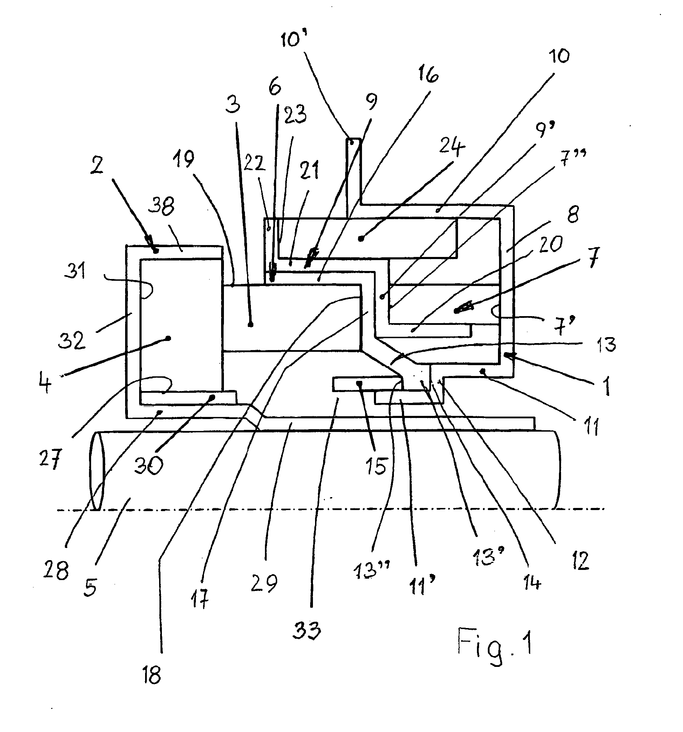

Die in Fig. 1 dargestellte Dichtung ist als Gleitringdichtung ausgebildet, die in bekannter Weise ein napfförmiges Gehäuse 1, eine buchsenförmige Halterung 2, einen Gleitring 3 und einen Gegenring 4 aufweist. Die Halterung 2 sitzt mit einem rohrförmigen Innenmantel 29 mit Presssitz auf einer Welle 5. Der Gegenring 4 liegt mit seiner vom Gleitring 3 abgewandten Stirnseite 31 an einem radial nach außen ragenden Ringboden 32 der Halterung 2 an. Der Gleitring 3 ist drehfest gelagert, während der Gegenring 4 mit der Welle 5 dreht. Der Gleitring 3 ist an einer als Balg ausgebildeten Sekundärdichtung 6 befestigt, die unter der Kraft einer Druckfeder 7 den Gleitring 3 gegen den Gegenring 4 drückt. Die Druckfeder 7 liegt mit einem Ende 7' an einem radialen Boden 8 des Gehäuses 1 und mit ihrem anderen Ende 7" an einem radial verlaufenden Ringsteg 9' eines Federtellers 9 an.

Das Gehäuse 1 hat einen zylindrischen Außenmantel 10, dessen freier Rand 10' radial nach außen abgewinkelt ist. Der Gehäusemantel 10 schließt an den radial nach innen verlaufenden Boden 8 an, der an einen zylindrischen Innenmantel 11 anschließt. Er geht etwa in halber axialer Länge über eine radial nach innen ragende Schulterfläche 12 in einen radial und axial weiter innen liegenden freien Innenmantelabschnitt 11' über. Die Achse des Außen- und Innenmantels 10 und 11 fällt mit der Achse der Welle 5 zusammen.

Die Sekundärdichtung 6 ragt mit einem verdickten Innenrand 13' eines Konusteiles 12 in die durch die Schulterfläche 12 und den Mantelabschnitt 11' gebildete Außenschulter 14. Um die Sekundärdichtung 6 bzw. seinen Konusteil 13 in der Schulter 14 axial zu verpressen, ist eine Hülse 15 vorgesehen, die an der Außenseite des Innenmantelabschnittes 11' und einem Ringrand 13' des Konusteiles 13 anliegt. Die Sekundärdichtung 6 hat in der Darstellung gemäß Fig. 1 etwa Z-förmigen Querschnitt mit einer zylindrischen Außenwand 16, die über einen radial nach innen ragenden Ringabschnitt 12 in den Konusteil 13 übergeht.

Der Gleit- und der Gegenring 3 und 4 sind in bekannter Weise ausgebildet und werden daher nicht näher beschrieben.

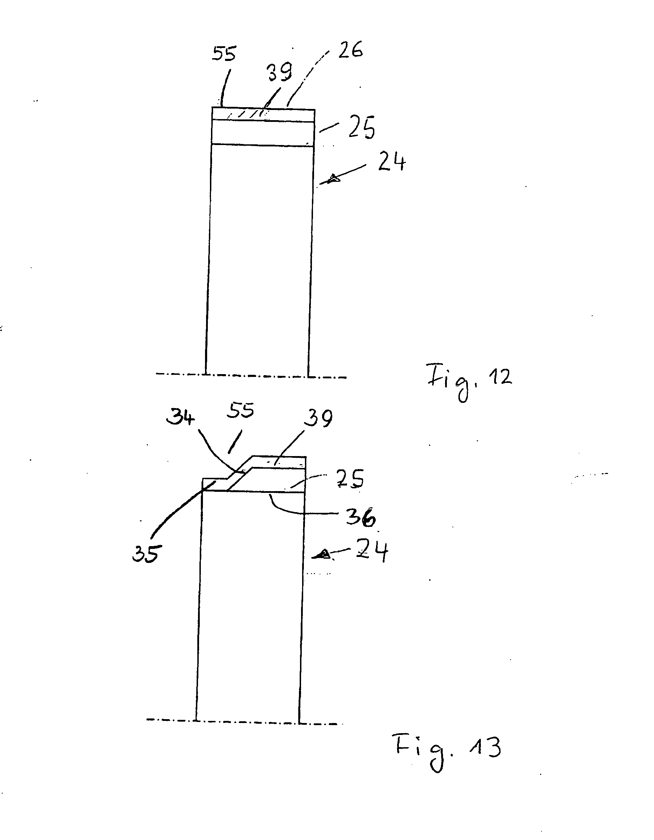

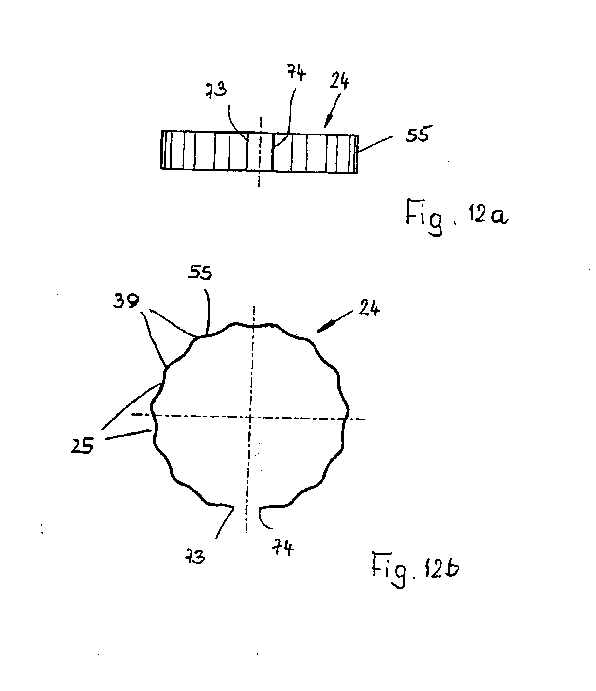

Die Sekundärdichtung 6 liegt mit ihrem Ringabschnitt 17 vorteilhaft über ihre ganze Ringfläche an der benachbarten Stirnfläche 18 des Gleitringes 3 an. Mit ihrer zylindrischen Außenwand 16 liegt die Sekundärdichtung 6 an der äußeren Mantelfläche 19 des Gleitringes 3 an. Der Federteller 9 hat, ähnlich wie die Sekundärdichtung 6, Z-förmige Querschnittsform. Im Unterschied zur Sekundärdichtung 6 ist der radial innere Teil 20 des Federtellers 9 zylindrisch ausgebildet. Der radial äußere Teil 21 des Federtellers 9 ist ebenfalls zylindrisch ausgebildet und umgibt den Gleitring über mehr als dessen halbe axiale Erstreckung. Der zylindrische Teil 21 des Federtellers 9 geht in einen radial nach außen gebogenen Ringrand 22 über. An einer durch den Rand 22 und den zylindrischen Teil 21 begrenzten Außenschulter 23 des Federtellers 9 liegt ein Dämpfungsteil 24 an, das in Fig. 12 näher dargestellt ist. Das Dämpfungsteil 24 dient zur Schwingungsdämpfung durch Erzeugung von Mikroreibung. Die Mikroreibung wird zwischen dem Dämpfungsteil 24 und der Innenseite des Außenmantels 10 des Gehäuses 1 sowie der Außenseite des Zylinderteils 21 des Federtellers 9 erzeugt.

Der Innenmantel 29 der Halterung 2 hat einen axial zurückversetzten Zylinderabschnitt 28, der an den Ringboden 32 anschließt. Der Abschnitt 28 hat eine axiale Erstreckung, die geringfügig größer ist als die axiale Breite des Gegenringes 4. Der Flansch 32 geht außen in einen weiteren Zylinderabschnitt 38 über, der koaxial zum Abschnitt 28 verläuft und geringfügig kleinere axiale Erstreckung hat. Diese ist gleich der axialen Breite des Gegenringes 4. Am zylindrischen Abschnitt 28 der Halterung 2 und der zylindrischen Innenfläche 27 des Gegenringes 4 liegt eine ringförmige Manschette 30 zur Abdichtung an. Ihre axiale Erstreckung ist geringfügig kleiner als die des Abschnittes 28 und geringfügig größer als die des Gegenringes 4 bzw. des Abschnittes 28 der Halterung 2. Die Manschette 30 dient auch zur Halterung des Gegenringes 4 in der Halterung 2.

Das Gehäuse 1 ragt mit seinem zylindrischen Innenmantel 11 mit radialem Spiel in einen Ringraum 33, der zwischen dem Gleitring 3 und dem Innenmantel 29 der Halterung 2 gebildet ist.

Die Ausbildung des ringförmigen Dämpfungsteiles 24 wird anhand von Fig. 12, 12a, 12b näher erläutert. Der Mantel 55 des Dämpfungsteiles 24 ist wellenförmig profiliert. Dadurch werden über den Umfang einander abwechseinde Rippen 39 und Vertiefungen 25 gebildet. Vorteilhaft sind die Rippen 39 und die Vertiefungen 25 im Radialschnitt gekrümmt ausgebildet. Mit den Rippen 39 liegt das Dämpfungsteil 24 an der Innenwandung des Gehäuses 1 sowie an der Außenseite des zylindrischen Teiles 21 des Federtellers 9 unter Vorspannung an. Wie sich aus Fig. 1 ergibt, ragt das Dämpfungsteil 24 axial aus dem Gehäuse 1 in Richtung auf den Rand 22 der Sekundärdichtung 6, die mit axialem Abstand vom Rand 10' des Gehäuses 1 liegt. Das Dämpfungsteil 24 liegt mit seiner einen Stirnseite am Ringrand 22 an. Die andere Stirnseite des Dämpfungsteiles 24 hat axialen Abstand vom Gehäuseboden 8.

Wie die Fig. 12a und 12b zeigen, weist das Dämpfungsteil 24 eine größere Zahl von Rippen 39 und Vertiefungen 25 auf. Das Dämpfungsteil 24 ist nicht geschlossen. Dadurch ergibt sich eine optimale Elastizität des Dämpfungsteils. In der Einbaulage können die beiden Enden 73, 74 des Dämpfungsteils 24 Abstand voneinander haben. Es ist auch möglich, dass die Enden 73, 74 in der Einbaulage einander überlappen. Die beiden Enden 73, 74 des Dämpfungsteils 24 können sich relativ zueinander in Umfangsrichtung des Dämpfungsteils bewegen.

Das Dämpfungsteil 24 wird durch ein geformtes Blechteil gebildet, das vorzugsweise aus Federstahl besteht. Ein solches Dämpfungsteil lässt sich einfach und kostengünstig fertigen.

Das Dämpfungsteil 24 wird über die Rippen 39 in der Einbaulage radial am Gehäuse 1 sowie am Federteller abgestützt. Durch diese Radialabstützung wird die in Axialrichtung der Gleitringdichtung wirkende Anpress- bzw. Schließkraft, die auf den Gleitring 3 wirkt, praktisch nicht beeinträchtigt. Dadurch bleiben die tribologischen Eigenschaften der Gleitringdichtung im Bereich des Dichtspaltes zwischen dem Gleitring 3 und dem Gegenring 4 durch den Einbau des Dämpfungsteiles 24 unbeeinflusst. Das Dämpfungsteil 24 verhindert wirkungsvoll die Dreh- bzw. Umfangsschwingungen des Gleitringes 3 während des Einsatzes, ohne dass hierdurch die Dichtwirkung nachteilig beeinflusst wird.

Das Dämpfungsteil 24 kann zumindest an einer Seite beschichtet sein, beispielsweise um einen Korrosionsschutz, einen Verschleißschutz und dergleichen zu erhalten. Auch kann eine solche Beschichtung verwendet werden, um eine gezielte Mikroreibung zwischen dem Dämpfungsteil 24 und dem Gehäuse 1 bzw. dem Federteller 9 zu erhalten.

Das Dämpfungsteil 24 kann auch vollständig ummantelt sein.

Es ist weiter möglich, an der Innen- und an der Außenseite des Dämpfungsteiles 24 unterschiedliche Beschichtungen vorzusehen. Dadurch ist es möglich, an beiden Seiten des Dämpfungsteils 24 unterschiedliche Mikroreibungswerte zu erhalten. Dadurch ist eine sehr einfache und dennoch wirkungsvolle Anpassung an unterschiedliche Einbauverhältnisse möglich.

Das Dämpfungsteil 24 kann auch mit entsprechenden Oberflächenstrukturen versehen sein, um gewünschte Mikroreibungswerte zu erhalten. Solche Oberflächenstrukturen können beispielsweise durch Aufrauen, durch Laser gebildete Strukturen und dergleichen gebildet sein.

Es ist ferner möglich, nicht das Dämpfungsteil 24, sondern die entsprechende Gegenfläche am Gehäuse 1 bzw. am Federteller 9 mit einer entsprechenden Beschichtung und/oder einer entsprechenden Oberflächenstruktur zu versehen.

Mit dem Dämpfungsteil 24 wird eine Geräuschbildung beim Einsatz der Gleitringdichtung zuverlässig vermieden. Mit dem Dämpfungsteil 24 wird über die Rippen 39 ein Radialkontakt zwischen dem Federteller 9 und dem Gehäuse 1 hergestellt.

Die Halterung 2 wird vorteilhaft durch ein Stahlteil gebildet, das drehfest auf der abzudichtenden Welle 5 sitzt. Der Gegenring 4 dient zur dynamischen Abdichtung und dreht, da er in die Halterung 2 eingebaut ist, zusammen mit der Welle 5. Die Hülse 15 dient zur axialen Verpressung des Konusteiles 13 der Sekundärdichtung 6, welche die statische Abdichtung der Gleitringdichtung bildet. Mit dem Gehäuse 1 wird die Gleitringdichtung in den Aufnahmeraum eines (nicht dargestellten) Bauteiles, beispielsweise eines Pumpengehäuses, eingepresst. Der Außenmantel 10 des Gehäuses 1 liegt dann unter Presssitz an der Wandung des Aufnahmeraumes an. Der radial nach außen gerichtete Flansch 10' des Außenmantels 10 kann beim Einbau der Gleitringdichtung als Anschlag dienen, wenn das Gehäuse 1 in den Aufnahmeraum eingepresst wird. Die Druckfeder 7 sorgt dafür, dass der Gleitring 3 axial gegen den Gegenring 4 gedrückt wird, so dass der Dichtspalt zwischen dem Gleitring 3 und dem Gegenring 4 einwandfrei geschlossen wird. Der Federteller 9 dient als Presssitz sowohl für den Gleitring 3, der axial über den Federteller 9 vorsteht, als auch für die Sekundärdichtung 6.

Das Dämpfungsteil 24 besteht aus Metall, vorzugsweise einem geformten Federblech. Es benötigt nur geringen Einbauraum und lässt sich einfach herstellen. Das Dämpfungsteil 24 ist zwischen dem Mantel 21 des Federtellers 9 und dem Mantels 10 des Gehäuses 1 radial eingespannt, so dass die Rippen 39 des Dämpfungsteiles 24 unter Vorspannung am Federteller 9 sowie am Gehäusemantel 10 anliegen. Das Dämpfungsteil 24 kann radiale Bewegungen des Gleitringes 3 durch entsprechende elastische Verformung der Rippen 39 bzw. der Vertiefungen 25 auffangen. Die beschriebene Mikroreibung des Dämpfungsteiles 24 führt darüber hinaus zu einer hervorragenden Dämpfungswirkung.

Wie Fig. 13 beispielhaft zeigt, müssen die Rippen 39 und die Vertiefungen 25 nicht über die gesamte axiale Breite des Dämpfungsteiles 24 vorgesehen sein. Die Rippen 39 und die Vertiefungen 25 des profilierten Mantels 55 erstrecken sich nur über die halbe axiale Breite des Mantels 55. Sie gehen über schräg verlaufende Zwischenabschnitt 34 in einen schmalen Zylinderabschnitt 35 über. Die Vertiefungen 25 sind vorteilhaft so tief, dass, im Axialschnitt gemäß Fig. 13 gesehen, die Innenseite 36 des Zylinderabschnittes 35 auch die tiefste Stelle der Vertiefung 25 an deren Innenseite bildet. Auch mit einer solchen Ausbildung wird mit dem Dämpfungsteil 24 eine hervorragende Geräuschdämpfung durch Mikroreibung erreicht.

Anstelle der Rippen 39 und Vertiefungen 25 können bei dieser Ausführungsform auch mit Abstand voneinander liegende Zungen vorgesehen sein, die über den Umfang des Dämpfungsteils 24 verteilt angeordnet sind. Auch der Zylinderabschnitt 35 kann aus einzelnen, in Umfangsrichtung mit Abstand hintereinander liegenden Zungen bestehen.

Bei der Gleitringdichtung nach Fig. 1 kann das Dämpfungsteil 24 entsprechend Fig. 12, 12a, 12b oder Fig. 13 ausgebildet sein.

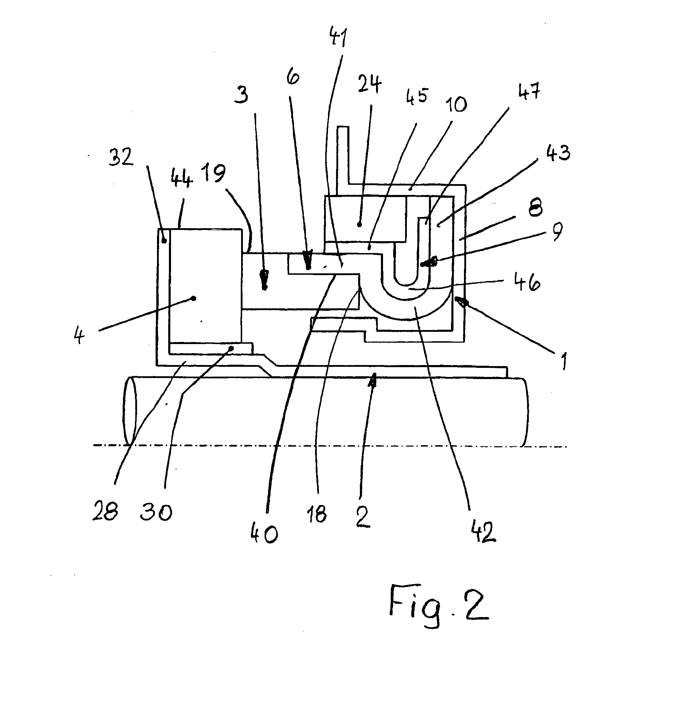

Fig. 2 zeigt eine Gleitringdichtung, deren Gleitring 3 an seiner äußeren Mantelfläche 19 mit einer Vertiefung 40 versehen ist, die zur Stirnseite 18 offen ist. In diese ringförmige Vertiefung 40 greift die Sekundärdichtung 6 ein. Sie hat einen zylindrischen Abschnitt 41, der die Vertiefung ausfüllt und in einen im Axialschnitt teilkreisförmig gebogenen Federteil 42 übergeht. Er geht in einen in einer Radialebene liegenden Ringscheibenabschnitt 43 über, mit dem die Sekundärdichtung 6 an der Innenseite des Bodens 8 des Gehäuses 1 anliegt. Die Sekundärdichtung 6 ist so ausgebildet, dass der bogenförmige Federteil vorgespannt ist und dadurch den Gleitring 3 gegen den Gegenring 4 drückt. Er sitzt unter Zwischenlage der Manschette 30 auf dem Zylinderabschnitt 28 der Halterung 2.

Im Unterschied zur vorigen Ausführungsform schließt an den Ringboden 32 der Halterung 2 kein Zylinderabschnitt an. Dadurch wird die äußere Mantelfläche 44 des Gegenringes 4 nicht abgedeckt. Der Ringboden 32 ist in Radialrichtung nur so lang, dass seine freie Stirnseite fluchtend zur Mantelfläche 44 des Gegenringes 4 liegt. Dadurch wird kein störender Absatz gebildet, in dem sich während des Betriebes der Gleitringdichtung Schmutzteilchen und dgl. absetzen können.

Die Sekundärdichtung 6 wird durch das Federelement 9 gegen den Gleitring 3 sowie den Gehäuseboden 8 gedrückt. Das Federelement 9 ist im Axialschnitt ähnlich geformt wie die Sekundärdichtung 6. Das Federelement 9 ist ein Formteil, das mit einem Zylinderabschnitt 45 auf der Sekundärdichtung aufliegt. An den Zylinderabschnitt 45 schließt ein im Axialschnitt teilkreisförmig gekrümmter Federabschnitt 46 an, der an der Außenseite des Federteiles 42 der Sekundärdichtung 6 anliegt und in einen Endabschnitt 47 übergeht. Er erstreckt sich radial und liegt am Ringscheibenabschnitt 43 der Sekundärdichtung 6 an. Mit dem Endabschnitt 47 wird der Ringscheibenabschnitt 43 gegen den Gehäuseboden 8 gedrückt.

Wie bei der vorigen Ausführungsform ist das Dämpfungsteil 24 zwischen dem Federelement 9 und dem Gehäuse 1 angeordnet. Das Dämpfungsteil 24 liegt mit seinen Rippen 39 am Zylinderabschnitt 45 der Sekundärdichtung 6 sowie am Außenmantel 10 des Gehäuses 1 unter elastischer Vorspannung an. Die Sekundärdichtung 6 hat im Unterschied zur vorigen Ausführungsform keinen radial nach außen ragenden Ringrand. Das Dämpfungsteil 24 steht wiederum axial geringfügig über das Gehäuse 1 in Richtung auf den Gegenring 4 vor und hat Abstand sowohl vom Endabschnitt 47 des Federelementes 9 als auch vom Ringscheibenabschnitt 43 der Sekundärdichtung 6. Das Dämpfungsteil 24 kann entsprechend Fig. 12, 12a, 12b oder Fig. 13 ausgebildet sein. Wie bei der vorigen Ausführungsform wird durch das Dämpfungsteil 24 ein radialer Kontakt zwischen dem Federelement 9 und dem Gehäuse 1 hergestellt.

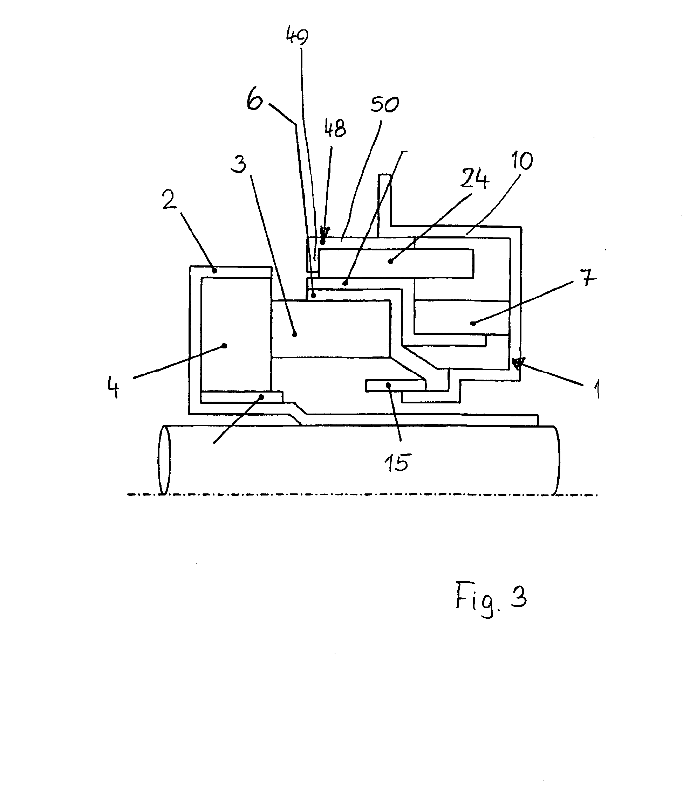

Fig. 3 zeigt eine Gleitringdichtung, die ähnlich aufgebaut ist wie die Gleitringdichtung nach Fig. 1. Der Unterschied besteht darin, dass das Dämpfungsteil 24 nicht unmittelbar am Außenmantel 10 des Gehäuses 1 anliegt, sondern unter Zwischenlage eines Rückhalteelementes 48. Es hat L-förmigen Querschnitt mit einem radial nach innen verlaufenden Flansch 49, mit dem das Rückhaltelement 48 an der einen Stirnseite des Dämpfungsteiles 24 anliegt. Der in einer Radialebene liegende Flansch 49 schließt radial außen an einen Zylindermantel 50 an, der in das Gehäuse 1 ragt und über einen Teil seiner Länge an der Innenwand des Gehäuseaußenmantels 10 anliegt. Der Zylindermantel 50 liegt über seine gesamte Länge auf dem Dämpfungsteil 24 auf, d.h. die Rippen 39 des Dämpfungsteiles 24 liegen an der Innenwand des Zylindermantels 50 an. Durch den Flansch 49 wird das Dämpfungsteil 24 axial in einer Richtung gesichert. Aufgrund des Flansches 49 ist der radial nach außen gerichtete Ringrand 22 des Federtellers 9, wie bei der Ausführungsform gemäß Fig. 1 vorgesehen, nicht erforderlich. Das Dämpfungsteil 24 liegt auf dem Federteller 9 in der beschriebenen Weise auf, der seinerseits auf der Sekundärdichtung 6 angeordnet ist. Im Übrigen ist diese Ausführungsform gleich ausgebildet wie das Ausführungsbeispiel gemäß Fig. 1.

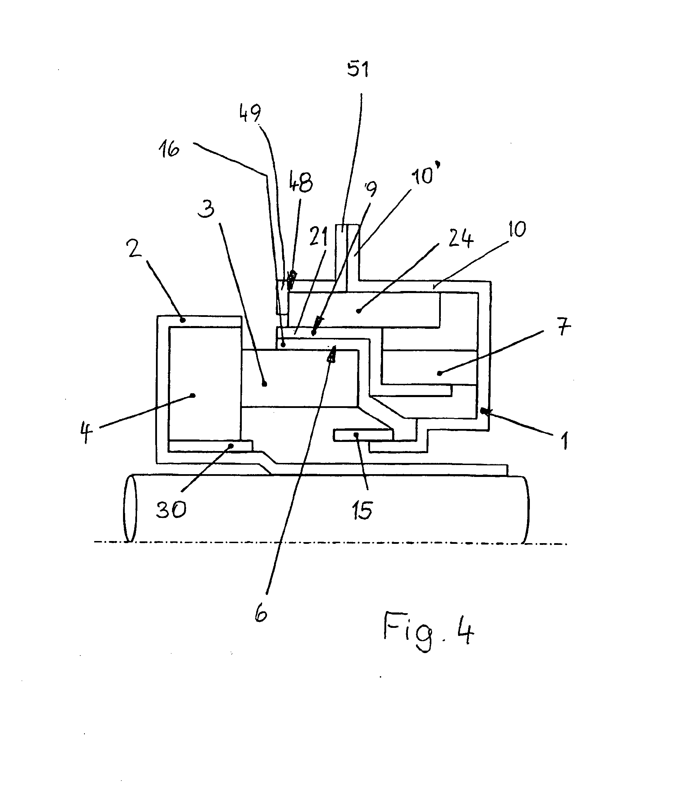

Fig. 4 zeigt eine Ausführungsform, die im Wesentlichen gleich ausgebildet ist wie das Ausführungsbeispiel gemäß Fig. 3. Das Rückhalteelement 48 weist nicht nur den das Dämpfungsteil 24 stirnseitig übergreifenden Flansch 49 an einem Ende, sondern am anderen Ende einen weiteren, radial ausgerichteten Flansch 51 auf. Er liegt am radial nach außen gerichteten Flansch 1' des Gehäuses 1 an und ist fest mit ihm verbunden. Die beiden Flansche 10' sind vorteilhaft gleich lang. Die zylindrischen Innenseiten des Außenmantels 10 des Gehäuses 1 und des Rückhalteelementes 48 liegen vorteilhaft fluchtend aneinander, so dass am Übergang zwischen den Flanschen 10', 51 kein störender Absatz gebildet wird. Dadurch wird auch eine durchgehende zylindrische Abstützfläche für das Dämpfungsteil 24 gebildet, das mit seinen Rippen 39 (Fig. 12, Fig. 12a, 12b und 13) unter radialer Vorspannung an der der Sekundärdichtung 6, am Federteller 9 sowie am Rückhalteelement 48 und am Gehäusemantel 10 anliegt. Der radial nach innen gerichtete Flansch 49 des Rückhalteelementes 48 ist vorteilhaft so angeordnet, dass seine Außenseite mit der Stirnseite des Zylinderabschnittes 21 des Federtellers 9 in einer gemeinsamen Radialebene liegt. Aber auch die Stirnseite der Außenwand 16 der Sekundärdichtung 6 liegt vorteilhaft in dieser Radialebene.

Im Übrigen ist die Gleitringdichtung nach Fig. 4 gleich ausgebildet wie die Ausführungsform nach Fig.1.

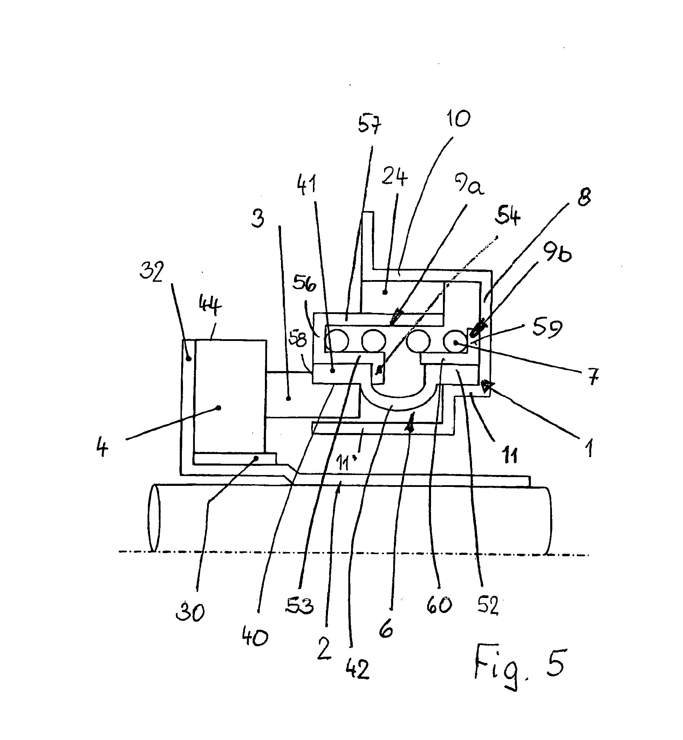

Fig. 5 zeigt eine Gleitringdichtung mit der Halterung 2, die gleich ausgebildet ist wie bei der Ausführungsform gemäß Fig. 2. Der Gegenring 4 wird lediglich an seiner vom Gehäuse 1 abgewandten Stirnseite vom Ringboden 32 der Halterung 2 bedeckt, während seine radial äußere Mantelfläche 44 frei ist. Am Gegenring 4 liegt der Gleitring 3 an, der wie bei der Ausführungsform nach Fig. 2 die Vertiefung 40 aufweist, in die der zylindrische Abschnitt 41 der Sekundärdichtung 6 eingreift. An den zylindrischen Abschnitt 41 schließt der Federteil 42 an, der im Unterschied zum Ausführungsbeispiel gemäß Fig. 2 in einen weiteren zylindrischen Abschnitt 52 übergeht, der vorteilhaft gleich ausgebildet ist wie der Zylinderabschnitt 41.

Die Gleitringdichtung hat zwei Federteller 9a, 9b, die axialen Abstand voneinander haben und zwischen denen sich die Druckfeder 7 erstreckt. Der Federteller 9a liegt mit einem inneren zylindrischen Abschnitt 53 auf dem Zylinderabschnitt 41 der Sekundärdichtung 6 auf. Das freie Ende des Zylinderabschnittes 53 hat einen radial nach innen gerichteten Ringflansch 54, mit dem der zylindrische Abschnitt 41 der Sekundärdichtung 6 axial belastet wird. Am anderen Ende geht der Zylinderabschnitt 53 über einen radial nach außen gerichteten Ringflansch 56 in einen äußeren Zylinderabschnitt 57 über, der sich in das Gehäuse 1 erstreckt und die Druckfeder 7 über ihren größten Teil ihrer Länge radial nach außen abdeckt. Der Ringflansch 56 liegt in Höhe einer Schulterfläche 58, durch welche die Vertiefung 40 im Gleitring 3 in Richtung auf den Gegenring 4 axial begrenzt ist. Unter der Kraft der Druckfeder 7 wird der Zylinderabschnitt 41 der Sekundärdichtung 6 zwischen dieser Schulterfläche 58 und dem Flansch 54 des Federtellers 9a axial verspannt.

Zwischen dem radial äußeren Zylindermantel 57 des Federelementes 9a und dem Außenmantel 10 des Gehäuses 1 befindet sich das Dämpfungsteil 24, das gemäß den Fig. 12, 12a, 12b oder 13 ausgebildet ist. Im Unterschied zu den vorigen Ausführungsbeispielen ragt das Dämpfungsteil 24 nicht axial aus dem Gehäuse 1.

Der Federteller 9b hat L-förmigen Querschnitt und wird durch die Druckfeder 7 mit seinem radial nach außen gerichteten kurzen Flansch 59 gegen den Gehäuseboden 8 gedrückt. Der Flansch 59 schließt an einen zylindrischen Mantel 56 an, mit dem der Federteller 9b unter radialer Vorspannung auf dem Zylinderabschnitt 52 der Sekundärdichtung 6 aufliegt. Der Zylinderabschnitt 52 liegt auf dem Innenmantel 11 des Gehäuses 1 auf. Der Innenmantelabschnitt 11' des Gehäuses 1 erstreckt sich bis unterhalb des Gleitringes 3, der radiale Abstand vom Innenmantelabschnitt 11' hat. Durch ihn wird auch der Federteil der Sekundärdichtung 6 radial nach innen abgedeckt.

Die Druckfeder 7 wird durch die Zylinderabschnitte 53, 57 des Federtellers 9a einwandfrei radial zentriert. Das Dämpfungsteil 24 ist wiederum zwischen dem Federteller 9a und dem Gehäuse 1 angeordnet. Die Rippen 39 des Dämpfungsteiles 24 liegen am Gehäuseboden 10 sowie am Zylinderabschnitt 57 des Federtellers 9a unter radialer Vorspannung an.

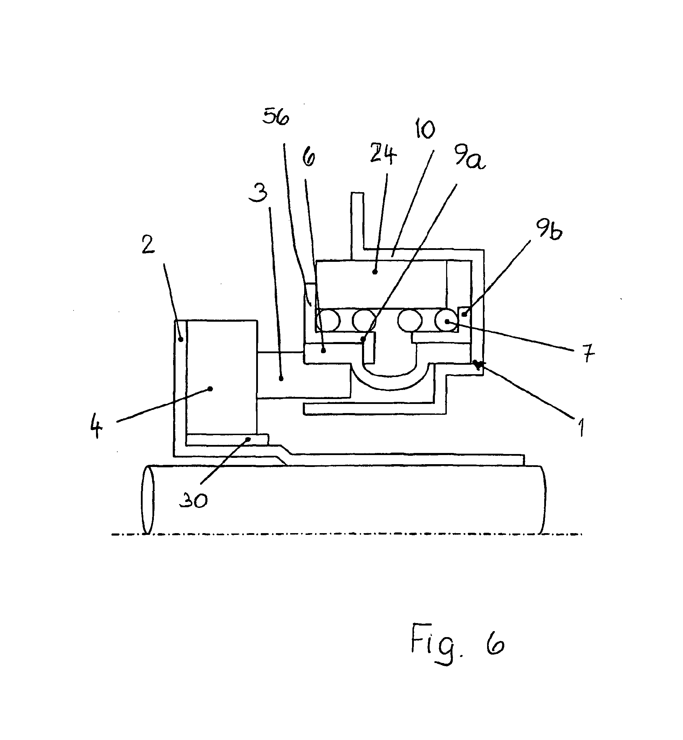

Fig. 6 zeigt eine Abwandlung der Ausführungsform gemäß Fig. 5. Der Federteller 9a hat Z-förmigen Querschnitt und liegt mit seinem radial nach außen gerichteten Ringflansch 56 an der Stirnseite des Dämpfungsteiles 24 an. Im Unterschied zum vorigen Ausführungsbeispiel ragt das Dämpfungsteil 24 axial aus dem Gehäuse 1. Durch den Ringflansch 56 des Federtellers 9a wird das Dämpfungsteil 24 axial gesichert. Wie bei der vorigen Ausführungsform dient somit der Federteller 9a nicht nur als Anlage für die Druckfeder 7, sondern auch als Axialsicherung für das Dämpfungselement 24.

Das Dämpfungsteil 24 umgibt die Druckfeder 7 nahezu über die gesamte axiale Länge, so dass diese einwandfrei radial zentriert ist. Bei dieser Ausführungsform besteht ein radialer Kontakt zwischen dem Dämpfungsteil 24 und der Druckfeder 7 sowie dem Außenmantel 10 des Gehäuses 1.

Im Übrigen ist diese Ausführungsform gleich ausgebildet wie die Gleitringdichtung nach Fig. 5.

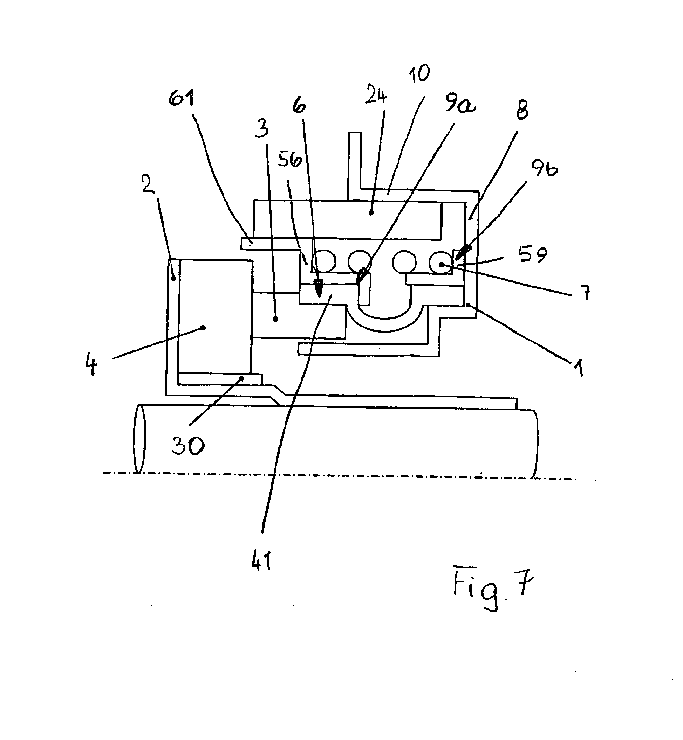

Bei der Ausführungsform nach Fig. 7 liegt das Dämpfungsteil 24 auf einem Zylinderabschnitt 61 des Federtellers 9a auf. Der Zylinderabschnitt 61 erstreckt sich in Richtung auf den Gegenring 4 vom Ringflansch 56 aus. Der Zylinderabschnitt 61 übergreift den Gegenring 4 mit geringem radialem Abstand. Zwischen der Schulterfläche 56 des Federteller 9a und dem Flansch 59 des Federtellers 9b erstreckt sich die Druckfeder 7.

Das Dämpfungsteil 24 erstreckt sich axial aus dem Gehäuse 1. Innerhalb des Gehäuses 1 liegt das Dämpfungsteil 24 an der Innenwand des Gehäuseaußenmantels unter radialer Vorspannung an. Außerhalb des Gehäuses 1 wird es durch den Zylinderabschnitt 61 des Federtellers 9a abgestützt. Er wird außerdem durch das Dämpfungsteil 24 radial nach innen belastet, so dass er den Zylinderabschnitt 41 der Sekundärdichtung 6 gegen den Gleitring 3 radial drückt.

Das Dämpfungsteil 24 erstreckt sich bis in Höhe der dem Gleitring 3 zugewandten Stirnseite des Gegenringes 4. Wie bei den vorigen Ausführungsbeispielen hat das Dämpfungsteil 24 axialen Abstand vom Gehäuseboden 8.

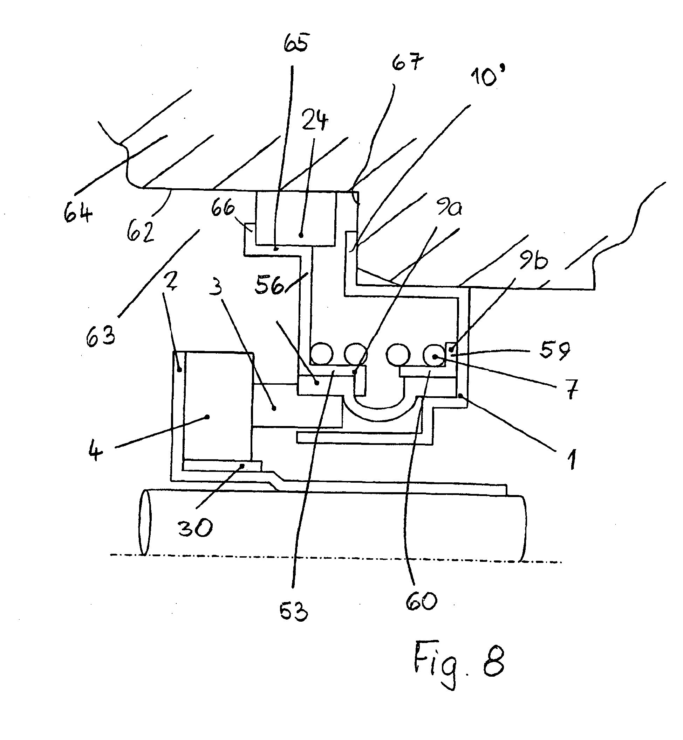

Beim Ausführungsbeispiel nach Fig. 8 ist das Dämpfungsteil 24 zwischen dem Federteller 9a und einer Innenwand 62 eines Aufnahmeraumes 63 eines Pumpengehäuses 64 angeordnet. Der Federteller 9a hat den radial nach außen gerichteten Flansch 56, der im Unterschied zum vorigen Ausführungsbeispiel wesentlich breiter ist und am radial äußeren Ende in einen Zylinderabschnitt 65 übergeht, an dem das Dämpfungsteil 24 anliegt. Der Zylinderabschnitt 65 ragt bis in den Bereich oberhalb des Gegenringes 4 und ist am freien Ende mit einem radial nach außen gerichteten Flansch 66 versehen, der an der Stirnseite des Dämpfungsteiles 24 anliegt und es axial sichert. Der Flansch 56 liegt mit axialem Abstand zum radial nach außen gerichteten Gehäuseflansch 10', mit dem das Gehäuse 1 am Boden 67 des Aufnahmeraumes 63 anliegt. Das Dämpfungsteil 24 hat axialen Abstand vom Flansch 10'.

Der Flansch 56 ragt radial so weit nach außen, dass er in Höhe des Gehäuseflansches 10' liegt.

Die Druckfeder 7 erstreckt sich zwischen dem Flansch 56 und dem radial nach außen gerichteten Flansch 59 des Federtellers 9b. Die Druckfeder 7 liegt auf den Zylinderabschnitten 53, 60 der beiden Federteller 9a, 9b auf.

Im Übrigen ist diese Ausführungsform gleich ausgebildet wie das vorige Ausführungsbeispiel.

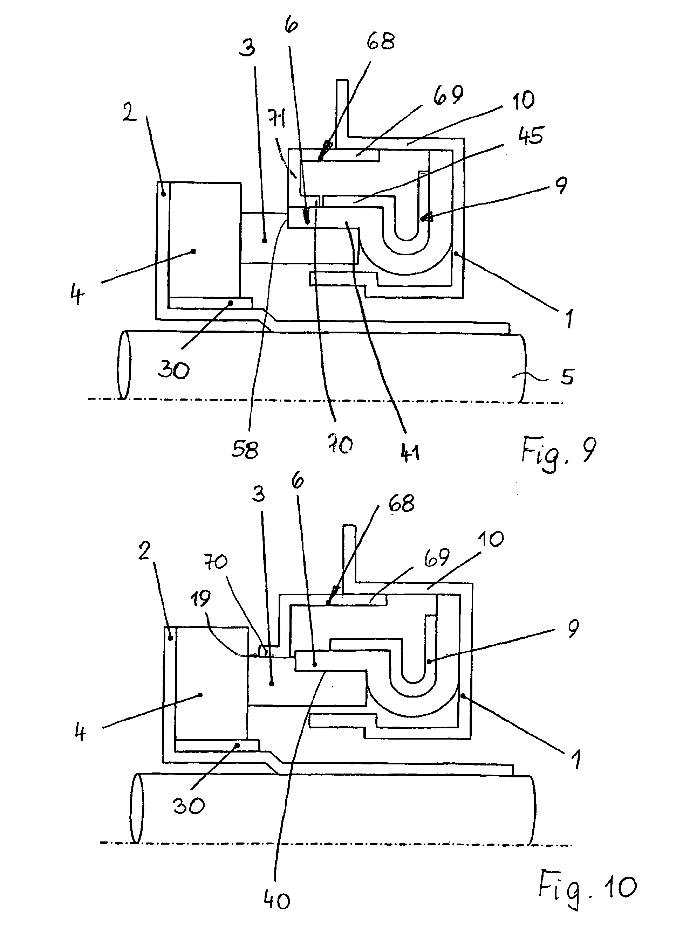

Die Gleitringdichtung nach Fig. 9 hat das Dämpfungsteil 68, das im Unterschied zum Dämpfungsteil 24 als Federabschnitt keine Rippen und Vertiefungen, sondern zylindrische Federabschnitte aufweist. Das Ausführungsbeispiel ist bis auf die Gestaltung des Dämpfungsteiles gleich ausgebildet wie die Ausführungsform gemäß Fig. 2. Das Dämpfungsteil 68 ist als Ringnapf ausgebildet, der einen radial äußeren Zylindermantel 69 und einen radial inneren Zylindermantel 70 aufweist, die durch einen radialen Boden 71 ineinander übergehen. Die beiden Zylindermäntel 69, 70 liegen koaxial zueinander und zur abzudichtenden Welle 5. Der äußere Zylindermantel 69 ist axial länger als der innere Zylindermantel 70. Der äußere Zylindermantel 69 ragt in das Gehäuse 1 und liegt an der Innenwand des Gehäusemantels 10 unter radialer Vorspannung an. Der kürzere Zylindermantel 70 liegt auf dem zylindrischen Abschnitt 41 der Sekundärdichtung 6 auf und belastet diese in radialer Richtung. Der Zylindermantel 70 hat geringen axialen Abstand vom Zylinderabschnitt 45 des Federtellers 9. Der in einer Radialebene liegende Boden 71 des Dämpfungsteiles 68 liegt in Höhe der Schulterfläche 58 des Gleitrings 3.

Der Zylindermantel 69 ist radial elastisch nachgiebig, so dass er entsprechende Radialbewegungen des Gleitringes 3 durch elastische Verformung auffangen kann. Die Geräuschentwicklung wird dadurch vermieden. Wie beim Dämpfungsteil 24 trägt die vorgesehene Mikroreibung zu einer optimalen Dämpfung bei.

Die Gleitringdichtung nach Fig. 10 entspricht im Wesentlichen dem Ausführungsbeispiel nach Fig. 9. Das Dämpfungsteil 68 hat den zylindrischen Außenmantel 69, der in der beschriebenen Weise unter radialer Vorspannung an der Innenseite des Mantels 10 des Gehäuses 1 anliegt. Im Unterschied zum vorigen Ausführungsbeispiel erstreckt sich der radial innen liegende Zylindermantel 70 nicht in gleiche Richtung wie der äußere Zylindermantel 69, sondern in Richtung auf den Gegenring 4. Der innere Zylindermantel 70 liegt auf der äußeren Mantelfläche 19 des Gleitringes 3 im Bereich außerhalb der Vertiefung 40 auf. Der Zylindermantel 69 ist aufgrund seiner axialen Länge ausreichend federelastisch, so dass er entsprechend radial nachgeben kann.

Die Gleitringdichtung ist im Übrigen gleich ausgebildet wie das Ausführungsbeispiel nach Fig. 9.

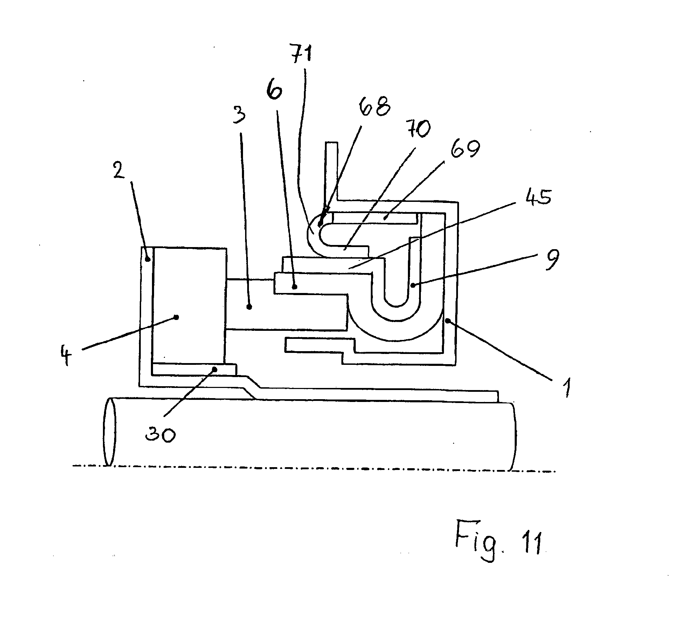

Fig. 11 zeigt ein Dämpfungsteil 68, dessen Boden 71 im Axialschnitt teilkreisförmig gekrümmt ausgebildet ist. Der radial innere Zylindermantel 70 liegt auf dem Zylinderabschnitt 45 des Federtellers 9 unter radialer Vorspannung auf.

Bei den beschriebenen Ausführungsbeispielen nach den Fig. 9 bis 11 kann der äußere Zylindermantel 69 entsprechend den Fig. 12, 12a, 12b und 13 wellenförmig über seinen Umfang profiliert sein, so dass der Zylindermantel lediglich mit den rippenartigen Erhöhungen am Gehäusemantel 10 anliegt.

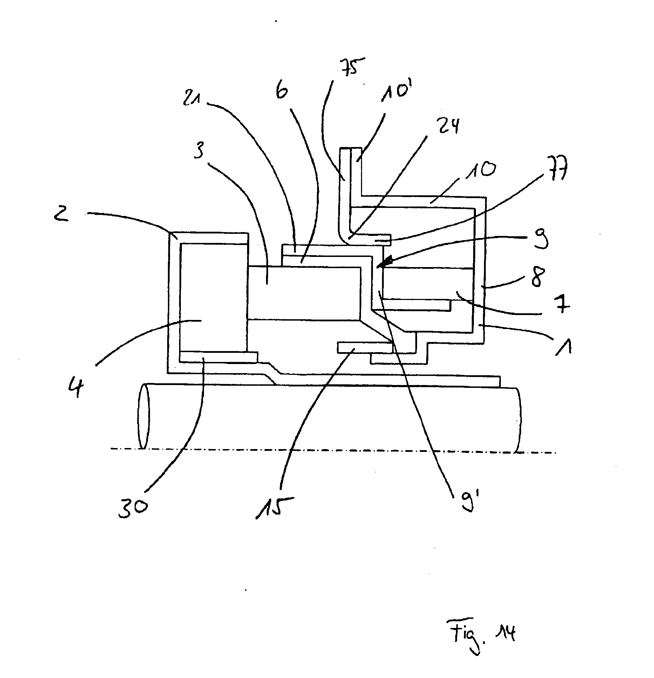

Die erfindungsgemäße Gleitringdichtung nach Fig. 14 entspricht in ihrem Aufbau im Wesentlichen dem Ausführungsbeispiel nach Fig. 1. Der Unterschied liegt in der Ausbildung und Anordnung des Dämpfungsteils 24. Es stützt sich axial auf dem zylindrischen Teil 21 des Federtellers 9 ab, der auf der Sekundärdichtung 6 sitzt und an dem die Druckfeder 7 angreift. Das Dämpfungsteil 24 stützt sich außerdem am radial nach außen ragenden Rand 10' des Gehäuses 1 ab.

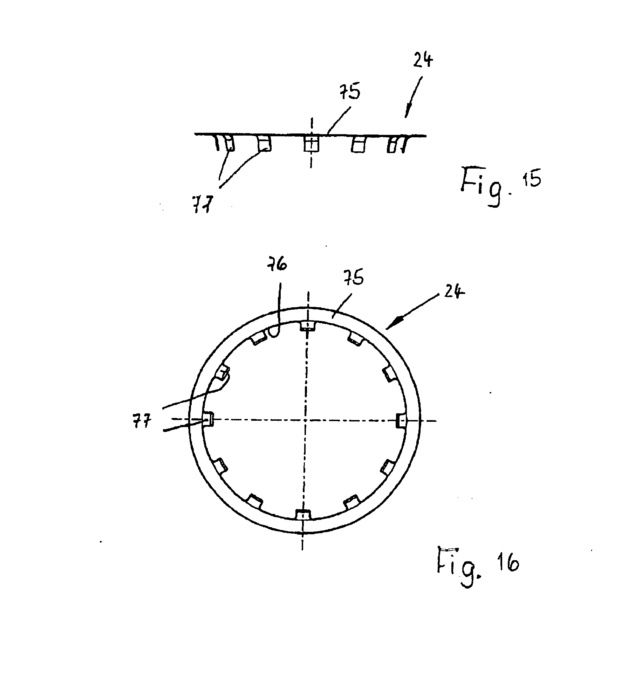

Das Dämpfungsteil 24 hat die in den Fig. 15 und 16 dargestellte Ausbildung. Es ist als geschlossener Ring ausgebildet und hat einen Ringteil 75, der als flache Ringscheibe ausgebildet ist. An der Innenseite 76 des Ringteils 75 sind über den Umfang verteilt Federzungen 77 vorgesehen, die vorteilhaft gleich ausgebildet sind und vorteilhaft gleichen Abstand voneinander haben. Die Federzungen ragen schräg nach innen und werden in der Einbaulage des Dämpfungsteils 24 elastisch verformt.

Bei der erfindungsgemäßen Gleitringdichtung nach Fig. 14 liegen die Federzungen 77 unter elastischer Verformung am zylindrischen Teil 21 des Federtellers 9 an. Mit der flachen Ringscheibe 75 liegt das Dämpfungsteil 24 am radial nach außen gerichteten Rand 10' des Gehäuses 1 an. Die Federzungen 77 stehen in Richtung auf den Boden 8 des Gehäuses 1 geringfügig über den Ringsteg 9' des Federtellers 9 vor. Die Federzungen 7 haben außerdem radialen Abstand von der Innenwand des Außenmantels 10 des Gehäuses 1.

Das Dämpfungsteil 24 ist wiederum so eingebaut, dass die Federzungen 77 die Mikroreibung zur Geräuschdämpfung in Umfangsrichtung erzeugen. Diese Umfangsrichtung ist, wie schon bei den Dämpfungsteilen 24 gemäß den Fig. 12, 12a, 12b und 13, die Hauptrichtung für die Erzeugung der Mikroreibung, während die Axialrichtung der Gleitringdichtung für die Schwingungsdämpfung keine Rolle spielt.

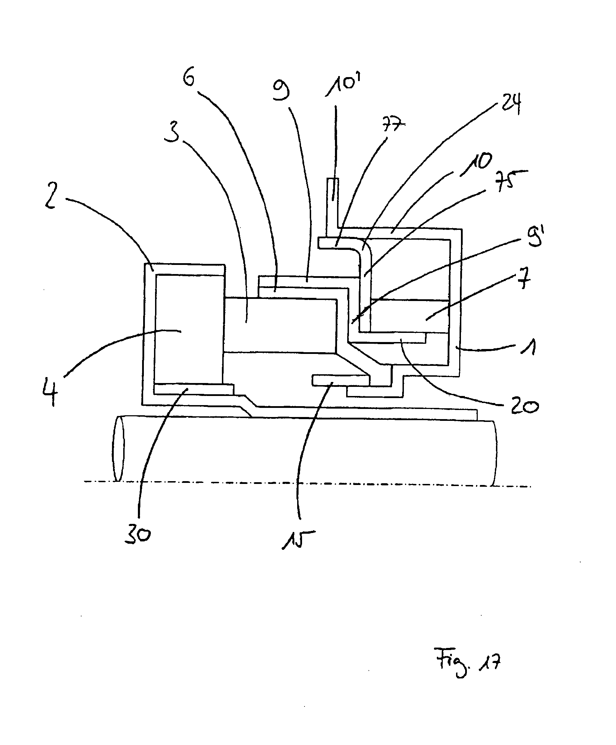

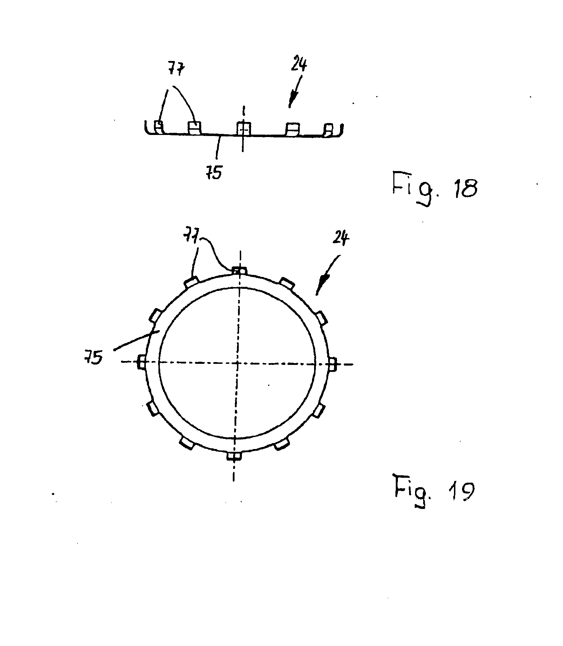

Die erfindungsgemäße Gleitringdichtung nach Fig. 17 ist gleich ausgebildet wie die Gleitringdichtung nach Fig. 14. Lediglich das Dämpfungsteil 24 hat eine andere Ausbildung und Einbaulage. Wie die Fig. 18 und 19 zeigen, sind die Federzungen 77 des Dämpfungsteils 24 an der Außenseite des scheibenförmigen Ringteiles 75 vorgesehen. Die Federzungen 77 sind schräg nach außen gerichtet. Sie liegen in der Einbaulage unter elastischer Verformung an der Innenseite des Außenmantels 10 des Gehäuses 1 an (Fig. 17). Die Federzungen 77 erstrecken sich vom Ringteil 75 aus geringfügig über den radial nach außen gerichteten freien Rand 10' des Gehäuses 1. Die Federzungen 77 haben radialen Abstand vom Federteller 9.

Der Ringteil 75 des Dämpfungsteiles 24 liegt am radialen Ringsteg 9' des Federtellers 9 unter der Kraft der Druckfeder 7 an. Der Ringteil 75 kann sich bis zum radial innen liegenden Zylinderteil 20 des Federtellers 9 erstrecken.

Bei dieser Ausführungsform liegen die elastischen Federzungen 77 unter elastischer Vorspannung am Gehäuse 1 an, während der in einer Radialebene liegende Ringteil 75 am radialen Ringsteg 9' des Federtellers 9 anliegt.

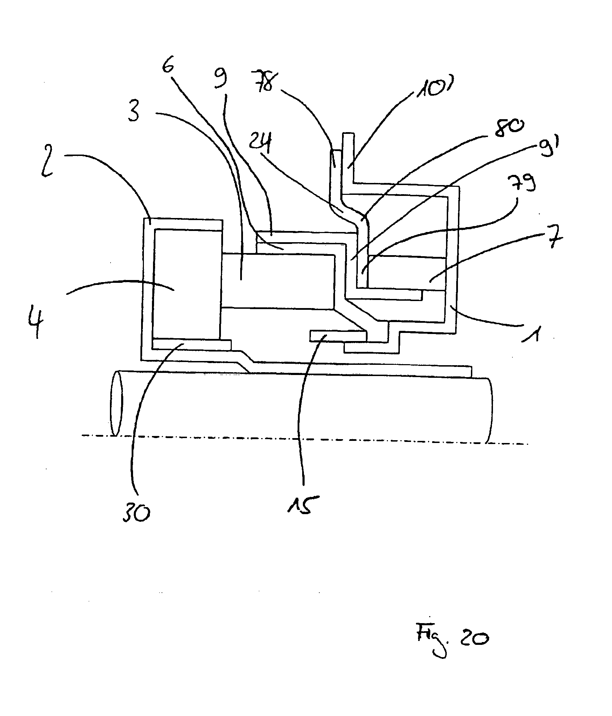

Fig. 20 zeigt eine Gleitringdichtung, die im Wesentlichen gleich ausgebildet ist wie die Gleitringdichtung gemäß den Fig. 14 oder 17. Lediglich das Dämpfungsteil 24 hat eine andere Ausbildung. Das Dämpfungsteil 24 hat zwei scheibenförmige Ringteile 78, 79, die jeweils in einer Radialebene der Gleitringdichtung liegen und durch einen als Federteil dienenden Konusteil 80 ineinander übergehen. Der radial äußere Ringteil 78 liegt am freien Rand 10' des Gehäuses 1 an. Der radial innere Ringteil 79 liegt am radialen Ringsteg 9' des Federtellers 9 an. Der Ringteil 79 wird durch die Druckfeder 7 axial gegen den radialen Ringsteg 9' des Federtellers 9 gedrückt.

Bei dieser Ausführungsform entsteht die Mikroreibung zwischen den radial sich erstreckenden Ringteilen 78, 79 des Dämpfungsteils 24 und dem radialen Rand 10' des Gehäuses 1 sowie dem radialen Ringsteg 9' des Federtellers 9.

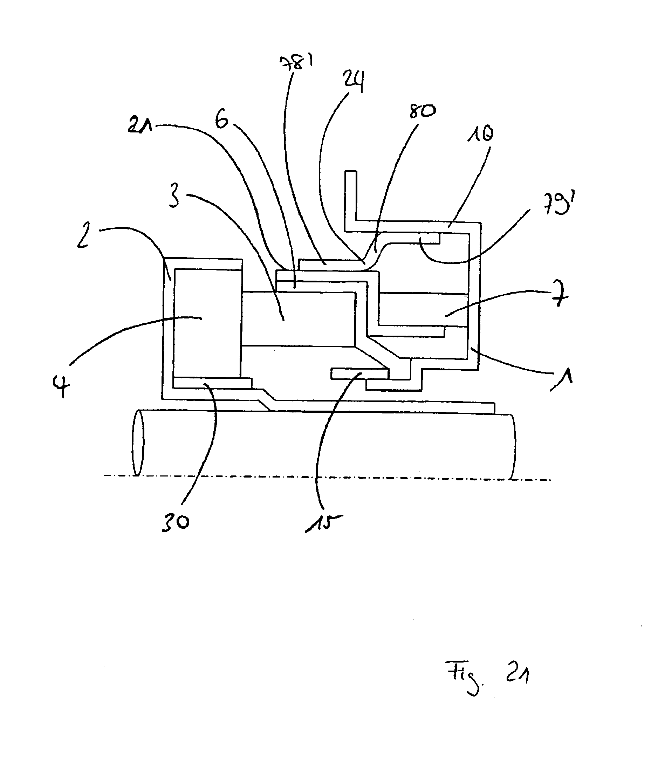

Bei der Gleitringdichtung nach Fig. 21 hat das Dämpfungsteil 24 zylindrische Ringteile 78', 79'. Das Dämpfungsteil 24 ist so angeordnet, dass der Ringteil 78' auf der Außenseite des Zylinderteils 21 des Federtellers 9 und der Ringteil 79' an der Innenseite des Außenmantels 10 des Gehäuses 1 anliegt. Die zylindrischen Ringteile 78' und 79' sind durch den Konusteil 80 miteinander verbunden. Im Übrigen ist die Gleitringdichtung gleich ausgebildet wie die Gleitringdichtung gemäß Fig. 20.

Die Ringteile 69, 70; 77, 78, 79; 78', 79' können segmentiert sein.

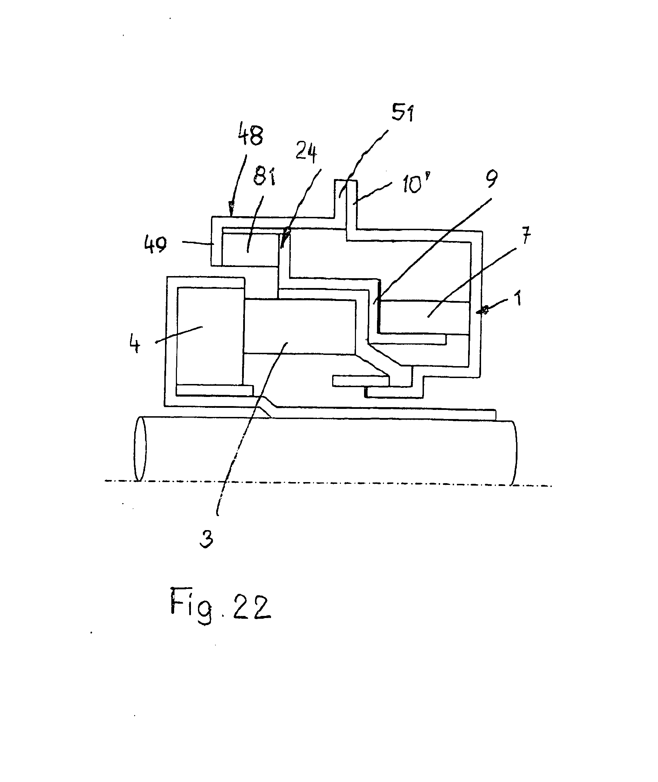

Bei der Gleitringdichtung nach Fig. 22 ist das Dämpfungsteil 24 einstückig mit dem Federteller 9 ausgebildet. Die Gleitringdichtung ist weitgehend gleich aufgebaut wie die Gleitringdichtung nach Fig. 1. Der radial nach außen gerichtete Ringrand des Federtellers 9 bildet das Dämpfungsteil 24, das vom Rückhalteelement 48 umgeben ist. Es ist entsprechend der Ausführungsform gemäß Fig. 4 ausgebildet und ist mit seinem Flansch 51 am freien Rand 10' des Gehäuses 1 befestigt. Am radial nach innen ragenden Flansch 49 des Rückhalteelementes 48 stützt sich ein Federteil 81 ab, das sich zwischen dem Flansch 49 und dem Dämpfungsteil 24 erstreckt und unter axialer Vorspannung an diesen beiden Teilen anliegt. Der Federteil 81 kann beispielsweise eine Wellfeder sein. Grundsätzlich ist es auch möglich, über den Umfang des Dämpfungsteils 24 verteilt Druckfedern anzuordnen, die sich zwischen dem Flansch 49 und dem Dämpfungsteil 24 erstrecken. Die von der Druckfeder 7 ausgeübte Druckkraft ist höher als die vom Federteil 81 ausgeübte Federkraft. Dadurch ist sichergestellt, dass der Gleitring 3 und der Gegenring 4 mit der für die Abdichtung erforderlichen Axialkraft aneinander liegen.

## Patentansprüche

1. Gleitringdichtung für eine Welle (5), mit wenigstens einer Halterung (2) für wenigstens eines der Dichtungselemente (3, 4), die durch einen Dichtring und einen Gegenring gebildet sind, die unter Axialkraft dichtend aneinander liegen, mit wenigstens einem Dämpfungsteil (24), das wenigstens ein geformtes Blechteil aufweist, das mit wenigstens einem elastisch verformbaren Federteil (77 ) versehen ist, der zur Erzeugung einer Mikroreibung zwischen dem Dämpfungsteil (24) und dem Abstützbereich unter Vorspannung abgestützt ist,
**dadurch gekennzeichnet, dass** die Halterung (2) den Gegenring (4) aufnimmt, der über die Halterung (2) drehfest mit der Welle (5) verbindbar ist, dass der Gegenring (4) auf einer ringförmigen, als Dichtung dienenden Manschette (30) sitzt, die zwischen einem zylindrischen Abschnitt (28) der Halterung (2) und einer zylindrischen Innenfläche (27) des Gegenringes (4) liegt und den Gegenring (4) in der Halterung (2) hält, dass das Dämpfungsteil (24) unter Zwischenlage eines Federtellers (9, 9a) und einer Sekundärdichtung (6) am Gleitring (3) anliegt, und dass der Federteil (77) eine von einem Ringteil (75) des Dämpfungsteiles (24) schräg abstehende Zunge ist, die in Einbaulage elastisch verformt ist und sich in Axialrichtung der Gleitringdichtung erstreckt.

2. Gleitringdichtung nach Anspruch 1,
**dadurch gekennzeichnet, dass** der Federtell (77), vorzugsweise unter radialer oder axialer Vorspannung, am Gehäuse (1) abgestützt ist.

3. Gleitringdichtung nach Anspruch 1,
**dadurch gekennzeichnet, dass** der Federteil (77) an einem Federteller (9) abgestützt ist.

4. Gleitringdichtung nach einem der Ansprüche 1 bis 3,
**dadurch gekennzeichnet, dass** zumindest der Federteil (77) teilweise aus dem Gehäuse (1) ragt.

## Claims

1. A mechanical face seal for a shaft (5), with at least one holding means (2) for at least one of the sealing elements (3, 4) which are formed by a sealing ring and a counter-ring which lie against each other in sealing manner under axial force, with at least one damping part (24) which has at least one shaped sheet metal part which is provided with at least one elastically deformable spring part (77) which is supported under initial tension in order to produce micro-friction between the damping part (24) and the supporting region,
**characterised in that** the holding means (2) receives the counter-ring (4), which can be connected in rotation-resistant manner to the shaft (5) via the holding means (2), **in that** the counter-ring (4) is seated on an annular collar (30) which serves as a seal, which collar lies between a cylindrical section (28) of the holding means (2) and a cylindrical inner surface (27) of the counter-ring (4) and holds the counter-ring (4) in the holding means (2), **in that** the damping part (24) lies against the sliding ring (3) with the interposition of a spring plate (9, 9a) and a secondary seal (6), and **in that** the spring part (77) is a tongue which protrudes obliquely from a ring part (75) of the damping part (24), which tongue in the installed position is elastically deformed and extends in the axial direction of the mechanical face seal.

2. A mechanical face seal according to Claim 1, **characterised in that** the spring part (77) is supported, preferably under radial or axial initial tension, on the housing (1).

3. A mechanical face seal according to Claim 1,
**characterised in that** the spring part (77) is supported on a spring plate (9).

4. A mechanical face seal according to one of Claims 1 to 3,
**characterised in that** at least the spring part (77) protrudes partially out of the housing (1).

## Revendications

1. Garniture mécanique d'étanchéité pour un arbre (5), comprenant au moins un support de maintien (2) pour au moins l'un des éléments d'étanchéité (3, 4) formés par un anneau d'étanchéité et un anneau conjugué, qui s'appuient de manière étanche l'un contre l'autre sous l'action d'une force axiale, la garniture comprenant également une partie d'amortissement (24), qui présente au moins une pièce de tôle ayant subi un formage et pourvue d'au moins une partie de ressort (77) déformable de manière élastique, qui s'appuie sous précontrainte pour produire une micro-friction entre la partie d'amortissement (24) et la zone d'appui,
**caractérisée en ce que** le support de maintien (2) loge l'anneau conjugué (4), qui peut être relié en rotation, de manière fixe, avec l'arbre (5) par l'intermédiaire du support de maintien (2), **en ce que** l'anneau conjugué (4) est placé sur une manchette (30) de forme annulaire servant de joint d'étanchéité, qui se situe entre un tronçon cylindrique (28) du support de maintien (2) et une surface intérieure cylindrique (27) de l'anneau conjugué (4) et maintient l'anneau conjugué (4) dans le support de maintien (2), **en ce que** la partie d'amortissement (24) s'appuie contre l'anneau de glissement d'étanchéité (3) avec interposition d'une coupelle de ressort (9, 9a) et d'un joint d'étanchéité secondaire (6), et **en ce que** la partie de ressort (77) est une languette qui fait saillie de manière inclinée d'une partie annulaire (75) de la partie d'amortissement (24), et qui, en position implantée, est déformée élastiquement et s'étend dans la direction axiale de la garniture mécanique d'étanchéité.

2. Garniture mécanique d'étanchéité selon la revendication 1,
**caractérisée en ce que** la partie de ressort (77), s'appuie contre le carter (1), de préférence sous précontrainte radiale ou axiale.

3. Garniture mécanique d'étanchéité selon la revendication 1,
**caractérisée en ce que** la partie de ressort (77) s'appuie contre une coupelle de ressort (9).

4. Garniture mécanique d'étanchéité selon l'une des revendications 1 à 3,
**caractérisée en ce qu'**au moins la partie de ressort (77) fait saillie partiellement hors du carter (1).
